# FASCICULE DE BREVET EUROPEEN

(11) **EP 2 532 840 B1**
(45) Date de publication et mention de la délivrance du brevet: **10.09.2014**
(21) Numéro de dépôt: 12170088.4
(22) Date de dépôt: 30.05.2012
(51) Int. Cl.: F01D 21/00, F02C 7/262, B64D 45/00

(54) **Procédé et dispositif d'aide à la surveillance d'une turbomachine d'aéronef**
Assistenzverfahren und -vorrichtung zur Überwachung eines Turbotriebwerks eines Luftfahrzeugs
Method and device for assisted monitoring of an aircraft turbine engine.

(30) Priorité: 09.06.2011 FR 1155049
(43) Date de publication de la demande: 12.12.2012
(73) Titulaire: Airbus Opérations SAS, 31060 Toulouse (FR); Airbus SAS, 31700 Blagnac (FR)
(72) Inventeur: Jegu, Patrick, 31000 Toulouse (FR); Birnfeld, Manfred, 31700 Blagnac (FR)
(74) Mandataire: Gevers France

(56) Documents cités:
- EP-A1- 2 072 399
- EP-A2- 2 110 516
- EP-A2- 2 253 804
- US-A1- 2001 001 845

## Description

La présente invention concerne un procédé et un dispositif d'aide à la surveillance d'une turbomachine d'aéronef, en particulier d'un avion de transport.

L'invention est relative à la détection et au traitement par procédure des conditions de dilatations thermiques différentielles pouvant entraîner un blocage du rotor ou d'autres dégradations mécaniques sur des moteurs de type turbomachine d'aéronefs, ainsi qu'à l'amélioration des procédures d'extinction et de rallumage de tels moteurs à turbine.

On sait que, dans certaines conditions d'utilisation, l'arrêt d'une turbomachine telle qu'un turboréacteur ou un turbopropulseur peut entraîner un blocage mécanique de la turbine, dû à une dilatation différentielle entre les éléments du stator et du rotor. Ce phénomène est connu sous la dénomination de « core lock » ou « rotor lock ». Ce blocage entraîne alors l'impossibilité de redémarrer le moteur : en vol, en cas d'extinction soudaine, mais également au sol, en cas d'extinction trop tôt après l'atterrissage où par souci d'économie en carburant, le roulage est parfois effectué avec un nombre réduit de moteurs.

Au-delà de l'effet de « core lock », la présente invention présente également un intérêt en matière de protection contre des effets de fatigue thermomécanique. Soumis à des cycles thermiques intenses et fréquents, les pièces métalliques des constituants du moteur subissent, en effet, des sollicitations de type thermomécanique qui peuvent être à l'origine de criques dans la structure métallique des composants du moteur. Les criques initiées au sein des disques de compresseur ou de turbine par exemple, peuvent se propager et entraîner leur rupture. Les vitesses de rotation élevées de ces éléments, ainsi que leur taille importante, peuvent entraîner lors de leur rupture des dégâts importants au système propulsif, à l'aéronef ou à l'environnement, car le niveau d'énergie induite est alors très élevé.

Les phases d'extinction du moteur constituent des expositions importantes au phénomène de fatigue thermomécanique, si des précautions de coupure du moteur, consistant à attendre plusieurs minutes avec un moteur maintenu à un régime ralenti avant l'extinction, ne sont pas appliquées.

En cas d'arrêt du moteur par extinction soudaine, causée par exemple par une distorsion aérodynamique, une privation temporaire de carburant ou sur une commande de l'équipage, l'air utilisé pour le refroidissement des parties mécaniques de la turbine ne circule plus suffisamment au sein du moteur. Si la vitesse de déplacement de l'aéronef est faible, l'entraînement du moteur en « windmilling » (rotation du moteur sous l'effet de la vitesse de l'air le pénétrant, par un effet de « moulinet ») est trop faible ou inexistant. Les dilatation et contraction différentielles entre le rotor, le stator et le carter de la turbine sont alors telles que ces parties peuvent entrer en contact mécanique et peuvent rendre impossible le redémarrage du moteur en moulinet, ou même avec l'assistance du démarreur. Les dilatation et contraction thermiques différentielles peuvent avoir des effets dans le sens radial et/ou longitudinal. S'il n'y a pas contact et impossibilité de rotation, le redémarrage d'un moteur qui a été coupé sans attendre une durée suffisamment longue au ralenti peut entraîner des vibrations ou des frottements en bout des parties rotatives, engendré par exemple par un phénomène dit de « rotor bow » où l'arbre portant les étages du compresseur et la turbine ainsi que la structure fixe se composant des stators et du carter sont fléchis entre leurs deux extrémités. Un démarrage sous « rotor bow » excessif et un contact des aubes du compresseur peuvent initier des criques dans ces derniers.

Par ailleurs, on connait, par le document EP-2 072 399, un procédé et un système de caractérisation et comptage de dépassements d'un seuil par un paramètre de fonctionnement d'un moteur. Plus précisément, ce document prévoit de mesurer la température EGT du moteur et de comparer cette température mesurée à un seuil d'alerte, cette surveillance ayant pour but de faciliter la maintenance.

La présente invention a pour objet de remédier aux inconvénients précités. Elle concerne un procédé qui permet d'apporter une aide à l'équipage d'un aéronef pour surveiller au moins une turbomachine dudit aéronef, en permettant notamment la détection et l'indication de conditions au cours desquelles l'arrêt d'un turboréacteur ou d'un turbopropulseur peut amener au blocage thermomécanique de ce dernier, empêchant son redémarrage, ou, dans un moindre degré, à des difficultés et des possibles endommagements lors du démarrage, si celui-ci est effectué dans une fenêtre de temps particulière après une coupure.

A cet effet, selon l'invention, ledit procédé est remarquable en ce que l'on réalise, de façon automatique et répétitive, les opérations successives suivantes :
a) on mesure sur l'aéronef au moins un paramètre une température relative à la turbomachine ;
b) on détermine, à l'aide du paramètre ainsi mesuré, une valeur illustrant un état thermomécanique de la turbomachine ;
c) on compare la valeur ainsi déterminée de l'état thermomécanique à au moins une valeur de seuil ; et
d) on prévoit au moins des moyens d'affichage susceptibles de présenter sur un écran de visualisation du poste de pilotage de l'aéronef, en fonction de la comparaison mise en oeuvre à l'étape c), au moins une indication relative au fonctionnement de la turbomachine qui comprend au moins l'une des indications suivantes :
   - une indication relative à un risque d'endommagement de la turbomachine ;
   - une indication relative à un risque de blocage de la turbomachine ; et
   - une indication relative à une procédure opérationnelle.

Ainsi, grâce à l'invention, on est en mesure de déterminer et d'afficher sur un écran de visualisation du poste de pilotage de l'aéronef une information relative au fonctionnement de la turbomachine, et plus précisément, comme indiqué ci-dessous, une information relative à un risque d'endommagement de la turbomachine (en cas de coupure de la turbomachine ou en cas de redémarrage de la turbomachine, en fonction de la situation courante) et/ou une information relative à une procédure opérationnelle, permettant d'indiquer au pilote les actions à mettre en oeuvre.

Par conséquent, en observant la ou les informations affichées, un membre d'équipage est en mesure d'interpréter rapidement l'état de la turbomachine, ce qui lui permet de prendre les décisions appropriées. De plus, comme les indications sont mises à jour de façon répétitive, il dispose d'informations qui illustrent la situation courante.

Dans un premier mode de réalisation préféré, on mesure, comme paramètre, au moins une température (et notamment une température d'éjection des gaz de la turbine), que l'on utilise ensuite à l'étape b) pour déterminer, à l'aide d'une méthode de calcul, une valeur illustrant l'état thermomécanique de la turbomachine. Avantageusement, on détermine ladite méthode de calcul dans une étape préliminaire, en particulier à l'aide de calculs, d'essais et/ou de simulations. Comme température d'éjection des gaz de la turbine, on peut prendre en compte une température EGT («Exhaust Gas Temperature» en anglais) ou une température TGT («Turbine Gas Temperature» en anglais).

Dans le cadre de la présente invention, l'état thermomécanique de la turbomachine illustre la dilatation d'au moins un élément de cette dernière (ou la dilation différentielle entre plusieurs éléments) en fonction des conditions thermiques existant à l'intérieur de la turbomachine, une telle dilatation pouvant entraîner des contacts ou frottements non souhaités et éventuellement un blocage mécanique.

En outre, dans un mode de réalisation particulier, on surveille le régime courant de la turbomachine, et on met en oeuvre les étapes b) à d) dès que ledit régime courant est supérieur à un régime au ralenti.

Par ailleurs, avantageusement, à l'étape c), on peut comparer ladite valeur de l'état thermomécanique à une pluralité de valeurs de seuil différentes, et les indications affichées dépendent du résultat de l'ensemble de ces comparaisons.

La présente invention peut être appliquée aussi bien à un aéronef qui se trouve au sol (par exemple lors d'un roulage sur un aéroport ou lors d'un essai moteur en maintenance) qu'à un aéronef en vol. Elle a pour objet de fournir des indications cockpit à l'équipage. En fonction de la phase opérationnelle de l'aéronef (au sol ou en vol), des indications différentes sont proposées, comme précisé ci-après.

Dans un premier mode de mise en oeuvre, pour un aéronef se trouvant dans une phase au sol avec une turbomachine en fonctionnement, on présente, avantageusement, à l'étape d), une indication qui indique le risque encouru en cas de coupure de la turbomachine (en fonction de l'état thermomécanique calculé). Dans ce cas, si une coupure (volontaire ou non) de la turbomachine survient, on présente une indication qui fournit des informations relatives à un éventuel redémarrage de la turbomachine. En particulier, cette indication peut comprendre, de façon avantageuse, une durée d'attente minimale conseillée avant un redémarrage.

Ainsi, pour une application au sol, on prévoit d'implémenter un indicateur au sein du poste de pilotage permettant d'indiquer à l'équipage le risque encouru en cas de coupure du moteur. Cet indicateur est affiché au sol et permet de gérer l'extinction des moteurs de l'aéronef dans des conditions permettant d'éviter des contraintes mécaniques. En particulier, lors de la phase de roulage, l'extinction des moteurs peu de temps après la fin du vol nécessite des précautions en termes de procédure, compte tenu de l'état thermomécanique encore élevé du moteur à cet instant.

Dans cette application, la présente invention permet à un pilote d'optimiser l'utilisation des moteurs au sol en phase de roulage en procédant à une extinction d'une ou de plusieurs turbomachines sans entraîner de dommages. Il en résulte :
- une optimisation de la consommation de carburant dans cette phase et donc une réduction du coût ; et
- une diminution des contraintes thermomécaniques sur les éléments constitutifs de la turbomachine, qui entraîne un allongement de la durée de vie des disques de turbine ou de compresseur et permet de bénéficier de l'avantage économique associé.

Par ailleurs, dans un second mode de mise en oeuvre, pour un aéronef se trouvant dans une phase de vol, pour lequel vient de survenir une coupure (volontaire ou non) de la turbomachine surveillée, on présente avantageusement, à l'étape d), une indication qui fournit des informations relatives à un éventuel redémarrage de cette turbomachine. De préférence, ladite indication comprend une vitesse optimale de l'aéronef pour redémarrer la turbomachine en moulinet.

Ainsi, pour une application à une phase de vol, on prévoit d'implémenter un indicateur au sein du poste de pilotage permettant d'indiquer, en cas d'extinction volontaire ou involontaire de la turbomachine, la procédure de pilotage opérationnelle à suivre afin de permettre un redémarrage dans des conditions optimales.

La présente invention concerne également un dispositif automatique d'aide à la surveillance d'au moins une turbomachine d'aéronef, comprenant au moins une turbine.

Selon l'invention, ledit dispositif est remarquable en ce qu'il comporte :
- des premiers moyens pour mesurer sur l'aéronef au moins un paramètre (et notamment une température) relatif à la turbomachine ;
- des deuxièmes moyens pour déterminer, à l'aide du paramètre ainsi mesuré, une valeur illustrant un état thermomécanique de la turbomachine ;
- des troisièmes moyens pour comparer la valeur ainsi déterminée de l'état thermomécanique à au moins une valeur de seuil ; et
- des moyens d'affichage susceptibles de présenter sur un écran de visualisation du poste de pilotage de l'aéronef, en fonction de la comparaison mise en oeuvre par lesdits troisièmes moyens, une indication relative au fonctionnement de la turbomachine qui comprend au moins l'une des indications suivantes :
   - une indication relative à un risque d'endommagement de la turbomachine ;
   - une indication relative à un risque de blocage de la turbomachine ; et
   - une indication relative à une procédure opérationnelle.

Dans le cadre de la présente invention, lesdits deuxièmes et troisièmes moyens peuvent faire partie :
- d'un calculateur de contrôle de la turbomachine, par exemple un système de régulation électronique numérique à pleine autorité de type FADEC (« Full-Authority Digital Engine Control » en anglais) ; ou
- d'un calculateur de l'aéronef, qui reçoit des paramètres moteur via des communications avioniques de bord.

La présente invention concerne également :
- un système d'aéronef pour un aéronef pourvu d'une pluralité de turbomachines, qui comprend une pluralité de dispositifs de surveillance tels que celui précisé ; et
- un aéronef, en particulier un avion de transport, qui est pourvu d'un tel système et/ou d'un tel dispositif.

Les figures du dessin annexé feront bien comprendre comment l'invention peut être réalisée. Sur ces figures, des références identiques désignent des éléments semblables.

La figure 1 est le schéma synoptique d'un dispositif d'aide à la surveillance conforme à l'invention.

Les figures 2 et 3 sont deux graphiques permettant d'expliquer les caractéristiques de la présente invention, pour deux modes de mise en oeuvre différents.

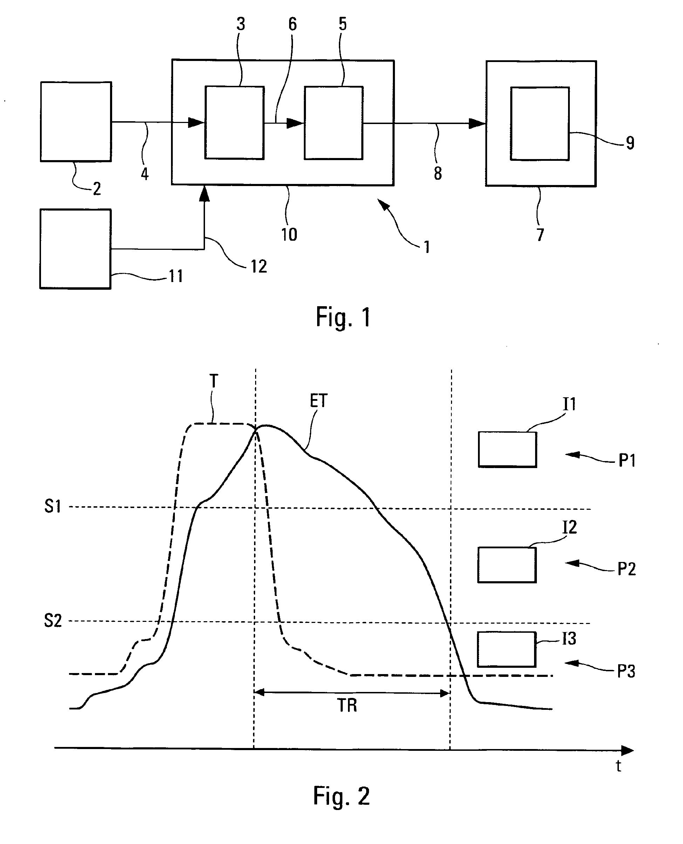

Le dispositif 1 conforme à l'invention et représenté schématiquement sur la figure 1 est destiné à aider l'équipage d'un aéronef (non représenté), en particulier d'un avion de transport civil, à surveiller au moins une turbomachine telle qu'un turboréacteur ou un turbopropulseur dudit aéronef qui fait partie d'un système propulsif de ce dernier.

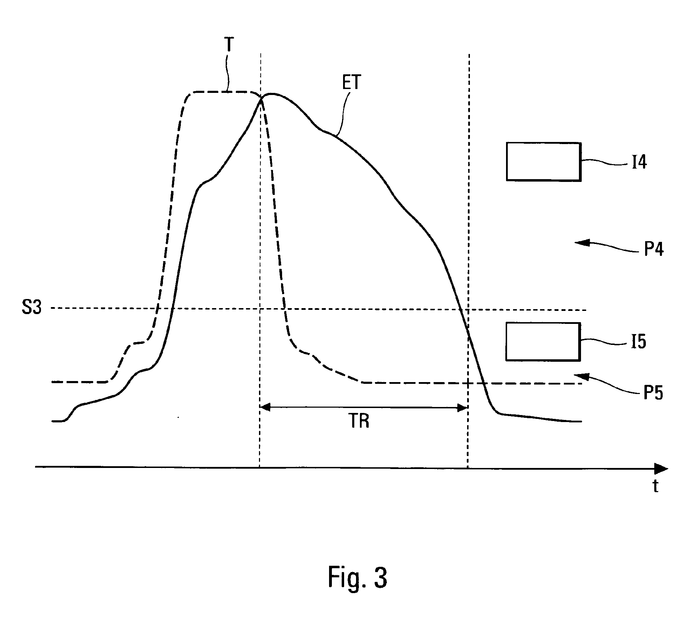

Pour ce faire, ledit dispositif 1 qui est automatique et embarqué sur l'aéronef comporte, selon l'invention :
- des moyens 2 pour mesurer, de façon usuelle, sur l'aéronef, au moins la valeur courante d'un paramètre relatif à la turbomachine, précisé ci-dessous ;
- des moyens 3 qui sont reliés par l'intermédiaire d'une liaison 4 auxdits moyens 2 et qui sont formés de manière à déterminer, à l'aide au moins de la valeur courante ainsi mesurée, une valeur illustrant un état thermomécanique de la turbomachine ;
- des moyens 5 qui sont reliés par l'intermédiaire d'une liaison 6 auxdits moyens 3 et qui sont formés de manière à comparer la valeur déterminée (par ces derniers) de l'état thermomécanique à au moins une valeur de seuil prédéterminée, par exemple la valeur S3 de la figure 3 ; et
- des moyens 7 qui sont reliés par l'intermédiaire d'une liaison 8 auxdits moyens 5 et qui sont formés de manière à présenter, sur au moins un écran de visualisation 9 (ou une partie d'écran) du poste de pilotage de l'aéronef, en fonction de la comparaison mise en oeuvre par les moyens 5, une indication relative au fonctionnement de la turbomachine.

Selon l'invention, cette indication relative au fonctionnement de la turbomachine comprend, comme précisé ci-après, au moins l'une des indications suivantes :
- une indication relative à un risque d'endommagement de la turbomachine ;
- une indication relative à un risque de blocage de la turbomachine ; et
- une indication relative à une procédure opérationnelle.

Ces indications peuvent être présentées sur l'écran de visualisation 9 sous forme de texte et/ou sous forme symboles de différentes couleurs et/ou de différents types.

De préférence, lesdits moyens 2 mesurent, comme paramètre, au moins une température, et notamment une température d'éjection des gaz de la turbine, telle que la température EGT («Exhaust Gas Temperature» en anglais) ou la température TGT («Turbine Gas Temperature» en anglais). Ils peuvent toutefois mesurer tout type de paramètre permettant de déterminer l'état thermomécanique de la turbomachine.

Par ailleurs, dans un mode de réalisation particulier, les moyens 5 comparent la valeur courante de l'état thermomécanique à une pluralité de valeurs de seuil différentes S2 et S3, comme représenté par exemple sur la figure 2, et les indications affichées sur l'écran 9 dépendent de la position de cette valeur courante par rapport à ces valeurs de seuil S2 et S3.

Ainsi, le dispositif 1 conforme à l'invention est en mesure de déterminer et d'afficher sur un écran de visualisation 9 du poste de pilotage de l'aéronef une information relative au fonctionnement de la turbomachine, et plus précisément, comme indiqué ci-dessous, une information relative à un risque d'endommagement de la turbomachine (en cas de coupure de la turbomachine ou en cas de redémarrage de la turbomachine, en fonction de la situation courante) et/ou une information relative à une procédure opérationnelle, permettant d'aider le pilote.

Par conséquent, en observant la ou les informations affichées sur l'écran 9, un membre d'équipage est en mesure d'interpréter rapidement l'état de la turbomachine, ce qui lui permet de prendre les décisions appropriées. De plus, les indications sont mises à jour de façon répétitive de sorte qu'il dispose d'informations qui illustrent la situation courante.

La présente invention peut être appliquée aussi bien à un aéronef qui se trouve au sol (par exemple lors d'un roulage sur un aéroport ou d'un essai moteur en maintenance) qu'à un aéronef en vol. Bien entendu, en fonction de la phase opérationnelle de l'avion (au sol ou en vol), des indications différentes sont affichées.

Les moyens 3 déterminent donc une valeur illustrant l'état thermomécanique ET de la turbomachine. Dans le cadre de la présente invention, l'état thermomécanique ET d'une turbomachine illustre la dilatation d'au moins un élément de cette dernière en fonction des conditions thermiques au sein de la turbomachine, et plus particulièrement la dilation différentielle entre plusieurs éléments pouvant entraîner des contacts non souhaités et éventuellement un blocage. Les éléments pris en compte sont tous ceux qui peuvent être à l'origine des phénomènes précédents, et plus particulièrement la turbine, mais également le compresseur ou d'autres constituants.

Pour ce faire, lesdits moyens 3 utilisent donc les valeurs mesurées du ou des paramètres utilisés et mettent en oeuvre une méthode de calcul, via des tables et/ou des calculs. Cette méthode de calcul est prédéterminée, en particulier à l'aide de calculs, d'essais et/ou de simulations.

En particulier, pour définir cette méthode de calcul, on peut réaliser une expérimentation sur banc d'essais, qui permet de caractériser la réponse thermomécanique de la turbine, en fonction des différents régimes testés et notamment en fonction de la température d'éjection des gaz. Il est possible au cours de ces essais d'effectuer une mesure des dilatations en extrémité de pale de la turbine, ou encore de mesurer la variation des jeux axiaux entre les stators et rotors des turbines ou des compresseurs.

La méthode de calcul peut être basée par exemple sur des tables de données issues de ces mesures sur un banc d'essais, où peuvent être caractérisés les éléments suivants :
- un temps de montée en état thermomécanique ;
- un temps de descente d'un état thermomécanique élevé à un état thermique suffisamment faible pour assurer des jeux suffisants et éviter un blocage par dilatation différentielle lors de la coupure du moteur.

La méthode de calcul peut également utiliser des techniques de calcul, tels que des moyens de filtrage en fonction de la température EGT par exemple.

L'évolution de l'état thermomécanique ET de la turbine en fonction de la température T, en l'occurrence la température EGT, au cours du temps t est illustrée sur les figures 2 et 3. L'état thermomécanique ET pour prévenir les blocages différentiels est réduit de manière satisfaisante lorsque la turbomachine est maintenu au ralenti pendant un durée TR suffisamment longue avant l'extinction de la turbomachine, comme précisé ci-dessous.

Dans un mode de réalisation préféré, lesdits moyens 3 et 4 font partie d'une unité de traitement d'informations 10 qui peut être intégrée :
- dans un calculateur usuel de contrôle de la turbomachine, par exemple un système de régulation électronique numérique à pleine autorité de type FADEC (« Full-Authority Digital Engine Control » en anglais) ; ou
- dans un calculateur usuel de l'aéronef, qui reçoit des paramètres moteur via des communications avioniques de bord.

Par ailleurs, dans un mode de réalisation particulier, ledit dispositif 1 comporte, de plus, des moyens de déclenchement 11 qui sont par exemple reliés par une liaison 12 à l'unité de traitement 10. Ces moyens de déclenchement 11 surveillent le régime courant de la turbomachine, et déclenchent la surveillance mise en oeuvre par le dispositif 1 (et notamment le calcul du paramètre d'état thermomécanique ET) dès que le régime courant est au-dessus du régime au ralenti.

Un premier mode de mise en oeuvre de l'invention est appliqué à un aéronef se trouvant dans une phase au sol. Dans ce cas, lorsque la turbomachine surveillée est en fonctionnement, le dispositif 1 présente sur l'écran 9 une indication qui indique le risque encouru en cas de coupure de la turbomachine (en fonction de l'état thermomécanique courant calculé). De plus, dans ce cas, si une coupure (volontaire ou non) de la turbomachine survient, le dispositif 1 présente sur l'écran 9 une indication qui fournit des informations relatives à un éventuel redémarrage de la turbomachine. En particulier, cette indication peut comprendre une durée d'attente minimale conseillée avant un redémarrage. De préférence, l'écran 9 est un écran usuel qui affiche des paramètres primaires de contrôle des moteurs de l'aéronef.

Ainsi, pour une application au sol, on prévoit un indicateur au sein du poste de pilotage qui permet d'indiquer à l'équipage le risque encouru en cas de coupure du moteur. Cet indicateur permet de gérer l'extinction des moteurs de l'aéronef dans des conditions permettant d'éviter les contraintes mécaniques précitées. En particulier, lors de la phase de roulage, l'extinction des moteurs peu de temps après la fin du vol nécessite des précautions en termes de procédure, compte tenu de l'état thermomécanique encore élevé du moteur à cet instant.

Cet indicateur peut présenter un nombre d'états quelconque, en fonction de la précision des traitements mis en place.

Dans le mode de réalisation décrit ci-après en référence à la figure 2, les moyens 5 comparent la valeur courante ETc (déterminée par les moyens 3) de l'état thermomécanique ET à deux valeurs de seuil différentes S1 et S2, et les indications affichées dépendent du résultat de l'ensemble de ces comparaisons. Dans ce cas, la turbomachine peut présenter l'un des trois états thermomécaniques P1, P2 et P3 suivants :
- élevé (P1), lorsque la valeur courante ETc est supérieure ou égale à la plus grande valeur de seuil S1 ;
- intermédiaire (P2), lorsque la valeur courante ETc est comprise entre les deux valeurs de seuil S1 et S2 ; et
- faible (P3), lorsque la valeur courante ETc est inférieure ou égale à la plus petite valeur de seuil S2.

Lorsque les moyens 5 déduisent que l'état thermomécanique de la turbine est élevé, l'indication I1 présentée sur l'écran de visualisation 9 indique (sous forme de texte, en particulier abrégé, et/ou sous forme de symbole) que la coupure de la turbomachine surveillée est à éviter si possible. Une telle coupure expose, en effet, à un risque de blocage mécanique de la turbine. Il est alors interdit par procédure opérationnelle de couper la turbomachine, sauf en cas d'urgence, car des dommages importants peuvent être causés. On notera que le manuel de bord se réfère à cette indication et présente les risques éventuels en cas d'extinction.

Dans ce cas, l'indicateur I1 est affiché, de préférence, en couleur rouge ou une autre couleur signalant un danger potentiel, pour bien signifier que la coupure du moteur expose à un risque de blocage mécanique du système propulsif.

Dans le cas d'une coupure au sol effectuée dans un état thermomécanique élevé (critique pour l'intégrité du moteur), il est proposé d'afficher sur l'écran de visualisation 9 un message approprié par exemple du type :
« HOT ENG SHUTDOWN, RESTART ENG AND OPERATE AT IDLE », à savoir « moteur chaud coupé, redémarrer le moteur et faire fonctionner au ralenti ».

En outre, les moyens 5 peuvent déduire que la turbomachine est dans un état thermomécanique intermédiaire, pour lequel l'extinction peut entraîner des difficultés lors d'un redémarrage ultérieur.

Lorsque l'état thermomécanique de la turbine est intermédiaire, une indication I2 présentée sur l'écran de visualisation 9 (sous forme de texte, en particulier abrégé, et/ou sous forme de symbole) permet d'attirer l'attention de l'équipage sur le fait que l'extinction du moteur présente des risques. Le moteur est encore chaud et la coupure est à éviter si possible. L'arrêt du moteur dans ces conditions peut entraîner des dommages lors d'un redémarrage ultérieur, en raison de vibrations élevées dues aux dilatations thermiques différentielles et/ou de contacts en extrémité d'aube de turbine. Le manuel de bord indique le temps au bout duquel il est possible de redémarrer le moteur sans s'exposer à ces risques.

Lorsque l'état thermomécanique de la turbine est intermédiaire, l'indicateur I2 est affiché, de préférence, en couleur ambre.

Dans le cas d'une coupure au sol effectuée dans un état thermomécanique intermédiaire, un message approprié peut éventuellement compléter l'indicateur d'état et indiquer le délai avant de procéder à un démarrage ultérieur, par exemple du type :
« HOT ENG SHUTDOWN, NO RE-START BEFORE X MIN », à savoir «moteur chaud coupé, ne pas redémarrer le moteur avant X minutes».

L'étendue du temps (X minutes) sera déterminée par les essais moteur. Le message comprendra cette information et le manuel de bord indiquera le temps (X minutes) au bout duquel il est possible de redémarrer le moteur sans s'exposer à ces risques, ou bien quelle instruction opérationnelle il faudra suivre pour éviter des dommages.

En outre, les moyens 5 peuvent déduire que l'état thermomécanique de la turbine est faible et permet une extinction du moteur sans risque de blocage mécanique ou détérioration dû à l'état thermomécanique. L'indicateur correspondant I3 est présentée sur l'écran de visualisation 9, de préférence en couleur verte. L'équipage peut alors procéder à l'extinction du moteur sans crainte de dommages thermiques.

Par conséquent, au sol, une indication visuelle I1, I2, I3 de l'état thermomécanique est fournie à l'équipage afin d'optimiser la procédure d'extinction moteur, dans le but d'éviter l'exposition au phénomène dit de « core lock », ou aux contraintes de fatigue mécanique d'origine thermique. Cet indicateur peut également être complété par des messages textuels indiquant la procédure à suivre pour procéder au redémarrage du moteur.

Dans cette application, la présente invention permet à un pilote d'optimiser l'utilisation des turbomachines au sol en phase de roulage en procédant à une extinction d'une ou de plusieurs turbomachines sans entraîner de dommages. II en résulte :
- une optimisation de la consommation de carburant dans cette phase et donc une réduction du coût ; et
- une diminution des contraintes thermomécaniques sur les éléments constitutifs de la turbomachine, qui entraîne un allongement de la durée de vie des disques de turbine ou de compresseur et permet de bénéficier de l'avantage économique associé.

Par ailleurs, un second mode de mise en oeuvre de l'invention est appliqué à un aéronef se trouvant dans une phase de vol. Dans ce cas, si une coupure (volontaire ou non) de la turbomachine survient, le dispositif 1 affiche sur l'écran de visualisation 9 une indication I4, I5 qui donne des informations sur la procédure de pilotage opérationnelle à suivre afin de permettre un redémarrage du moteur dans des conditions optimales. Si nécessaire, une telle indication peut également indiquer une vitesse optimale de l'aéronef pour redémarrer la turbomachine en moulinet.

Dans le mode de réalisation décrit ci-après (à titre d'exemple) en référence à la figure 3, les moyens 5 comparent la valeur courante ETc (déterminée par les moyens 3) de l'état thermomécanique ET à une unique valeur de seuil S3, et les indications I4 et I5 affichées sur l'écran de visualisation 9 dépendent du résultat de cette comparaison. Dans ce cas, la turbomachine peut présenter l'un des deux états thermomécaniques P4 et P5 suivants :
- critique (P4), lorsque la valeur courante ETc est supérieure ou égale à la valeur de seuil S3 ; et
- faible (P5), lorsque la valeur courante ETc est inférieure à ladite valeur de seuil S3 de manière à autoriser un redémarrage immédiat du moteur.

En vol, dans le cas d'une coupure effectuée dans un état thermomécanique critique pour l'intégrité du moteur, il est proposé d'afficher un message approprié sur l'écran de visualisation 9 par exemple du type :
« HOT ENG SHUTDOWN, MANDATORY MAINTAIN SPEED FOR RELIGHT : Y kt » , à savoir « moteur chaud coupé, vitesse réglementaire de redémarrage : Y noeuds ».

La vitesse indiquée (Y kt) représente la vitesse optimale de redémarrage du moteur en moulinet. Le fait de forcer à atteindre cette vitesse, en entraînant le moteur en rotation, permet d'une part de limiter le temps entre la coupure et la tentative de redémarrage dans des conditions favorables à celle-ci après coupure en altitude de croisière, et d'autre part, d'établir un flux d'air suffisant au sein du moteur. Ce flux d'air permet de maintenir les rotors en rotation et de refroidir les parties chaudes et donc dilatées du moteur, en diminuant le volume de ces pièces, ce qui permet d'augmenter les chances de redémarrage en éliminant le risque de grippage mécanique dû à la dilatation et à la contraction différentielle des pièces mécaniques.

Par conséquent, en permettant d'éviter des conditions imposant des contraintes thermomécaniques élevées, le dispositif 1 engendre une augmentation de la durée de vie des constituants mécaniques du moteur et présente un avantage économique et opérationnel pour les opérateurs. Plus particulièrement :
A/ au sol, l'application des procédures associées à l'invention permet de prévenir les phénomènes de contact en extrémité de pale de turbine ou les phénomènes vibratoires de balourd qui interviennent lorsque le moteur a été éteint dans un état trop chaud, en repoussant le redémarrage ultérieur. Le dispositif 1 permet en outre, associé à des procédures opérationnelles adaptées, d'optimiser la procédure d'extinction afin d'effectuer le roulage sur un nombre réduit de moteurs, cette procédure étant recherchée par les opérateurs à des fins d'économie de carburant ; et
B/ en vol, le dispositif 1 peut être utilisé afin d'indiquer à l'équipage la procédure opérationnelle qui permettra de procéder au redémarrage du moteur dans les meilleures conditions, en évitant le cas d'un blocage thermomécanique de type « core-lock ».

Bien entendu, la présente invention est formée de manière à surveiller, de préférence, l'ensemble des turbomachines de l'aéronef. Pour ce faire, soit le dispositif de surveillance 1 est formé de manière à mettre en oeuvre les procédures précédentes pour l'ensemble des turbomachines, les moyens d'affichage 7 pouvant alors comporter un seul écran pour afficher l'ensemble des indications ou un écran par turbomachine, soit on prévoit un système qui comprend une pluralité de dispositifs de surveillance 1 dont chacun est dédié à une turbomachine.

## Revendications

1. Procédé d'aide à la surveillance d'au moins une turbomachine d'aéronef, comprenant au moins une turbine, procédé selon lequel :
a) on mesure sur l'aéronef au moins une température relative à la turbomachine;
dans lequel on réalise de plus, de façon automatique et répétitive, les opérations successives suivantes :
b) on détermine, à l'aide de la température ainsi mesurée, une valeur illustrant un état thermomécanique de la turbomachine, qui illustre la dilatation d'au moins un élément de cette dernière en fonction de conditions thermiques ;
c) on compare la valeur ainsi déterminée de l'état thermomécanique à au moins une valeur de seuil (S1 à S3) ; et
d) on prévoit au moins des moyens d'affichage (7) qui présentent sur un écran de visualisation (9) du poste de pilotage de l'aéronef, en fonction de la comparaison mise en oeuvre à l'étape c), au moins une indication (11 à 15) relative au fonctionnement de la turbomachine qui comprend au moins l'une des indications suivantes :
- une indication relative à un risque d'endommagement de la turbomachine ;
- une indication relative à un risque de blocage de la turbomachine ; et
- une indication relative à une procédure opérationnelle permettant d'indiquer au pilote des actions à mettre en oeuvre.

2. Procédé selon la revendication 1,
**caractérisé en ce qu'**à l'étape b) on détermine la valeur illustrant l'état thermomécanique de ladite turbomachine, à l'aide d'une méthode de calcul que l'on détermine dans une étape préliminaire.

3. Procédé selon la revendication 2,
**caractérisé en ce que**, pour définir ladite méthode de calcul, on réalise, dans une étape préliminaire, une expérimentation sur banc d'essais qui permet de caractériser la réponse thermomécanique de la turbine en fonction de différents régimes testés.

4. Procédé selon l'une des revendications précédentes,
**caractérisé en ce que** l'on surveille le régime courant de la turbomachine, et **en ce que** l'on met en oeuvre les étapes b) à d) dès que ledit régime courant est supérieur à un régime au ralenti.

5. Procédé selon l'une quelconque des revendications précédentes,
**caractérisé en ce qu'**à l'étape c), on compare la valeur de l'état thermomécanique à une pluralité de valeurs de seuil différentes (S1, S2).

6. Procédé selon l'une quelconque des revendications 1 à 5, pour un aéronef se trouvant dans une phase au sol, la turbomachine étant en fonctionnement,
**caractérisé en ce qu'**à l'étape d), on présente une indication qui indique le risque encouru en cas de coupure de la turbomachine.

7. Procédé selon la revendication 6, pour un aéronef dans une phase au sol, pour lequel vient de survenir une coupure de la turbomachine, **caractérisé en ce qu'**à l'étape d), on présente une indication qui fournit des informations relatives à un éventuel redémarrage de la turbomachine et au moins une durée d'attente minimale conseillée avant un redémarrage de la turbomachine.

8. Procédé selon la revendication 7,
**caractérisé en ce qu'**à l'étape c), on compare la valeur courante de l'état thermomécanique à deux valeurs de seuil S1 et S2, et **en ce que** :
- lorsque ladite valeur courante est supérieure ou égale à la plus grande valeur de seuil S1, la turbomachine présente un état thermomécanique, pour lequel la coupure de ladite turbomachine est à éviter ;
- lorsque la valeur courante est comprise entre S1 et S2, la turbomachine présente un état thermomécanique, pour lequel l'extinction peut entraîner des difficultés lors d'un redémarrage ultérieur ; et
- lorsque la valeur courante est inférieure ou égale à S2, la turbomachine présente un état thermomécanique permettant une extinction.

9. Procédé selon l'une quelconque des revendications 1 à 5, pour un aéronef se trouvant dans une phase de vol, pour lequel vient de survenir une coupure de la turbomachine,
**caractérisé en ce qu'**à l'étape d), on présente une indication qui fournit des informations relatives à un éventuel redémarrage de la turbomachine.

10. Procédé selon la revendication 9,
**caractérisé en ce que** ladite indication comprend une vitesse optimale de l'aéronef pour redémarrer la turbomachine en moulinet.

11. Dispositif d'aide à la surveillance automatique d'au moins une turbomachine d'aéronef, comprenant au moins une turbine, ledit dispositif (1)
comportant des premiers moyens (2) pour mesurer sur l'aéronef au moins une température relative à la turbomachine,
et qui comporte de plus :
- des deuxièmes moyens (3) pour déterminer, à l'aide de la température ainsi mesurée, une valeur illustrant un état thermomécanique de la turbomachine, qui illustre la dilatation d'au moins un élément de cette dernière en fonction de conditions thermiques ;
- des troisièmes moyens (5) pour comparer la valeur ainsi déterminée de l'état thermomécanique à au moins une valeur de seuil (S1 à S3) ; et
- des moyens d'affichage (7) qui présentent sur un écran de visualisation (9) du poste de pilotage de l'aéronef, en fonction de la comparaison mise en oeuvre par lesdits troisièmes moyens (5), au moins une indication (I1 à I5) relative au fonctionnement de la turbomachine qui comprend au moins l'une des indications suivantes :
• une indication relative à un risque d'endommagement de la turbomachine ;
• une indication relative à un risque de blocage de la turbomachine ; et
• une indication relative à une procédure opérationnelle permettant d'indiquer au pilote des actions à mettre en oeuvre.

12. Dispositif selon la revendication 11,
**caractérisé en ce que** lesdits deuxièmes et troisièmes moyens (3, 5) font partie d'un calculateur de contrôle de la turbomachine.

13. Dispositif selon la revendication 11,
**caractérisé en ce que** lesdits deuxièmes et troisièmes moyens (3, 5) font partie d'un calculateur de l'aéronef.

14. Système d'aéronef pour un aéronef pourvu d'une pluralité de turbomachines,
**caractérisé en ce qu'**il comporte une pluralité de dispositifs (1) tels que celui spécifié sous l'une des revendications 11 à 13, dont chacun est associé à l'une desdites turbomachines.

15. Aéronef ,
**caractérisé en ce qu'**il comporte au moins un dispositif (1) tel que celui spécifié sous l'une des revendications 11 à 13.

## Patentansprüche

1. Verfahren zur Hilfe bei der Überwachung mindestens eines Turbotriebwerks eines Flugzeugs, das mindestens eine Turbine umfasst, bei dem
a) an dem Flugzeug mindestens eine Temperatur des Turbotriebwerks gemessen wird;
wobei des Weiteren die folgenden aufeinander folgenden Arbeitsgänge automatisch und wiederholt durchgeführt werden:
b) mit Hilfe der so gemessenen Temperatur ein Wert bestimmt wird, der einen thermomechanischen Zustand des Turbotriebwerks veranschaulicht, der die Ausdehnung mindestens eines seiner Elemente in Abhängigkeit von thermischen Bedingungen veranschaulicht;
c) der so bestimmte Wert des thermomechanischen Zustands mit mindestens einem Schwellwert (S1 bis S3) verglichen wird; und
d) mindestens Anzeigemittel (7) vorgesehen werden, die auf einem Anzeigebildschirm (9) des Cockpits des Flugzeugs in Abhängigkeit von dem in Schritt c) durchgeführten Vergleich mindestens eine Angabe (I1 bis I5) über den Betrieb des Turbotriebwerks darstellen, die mindestens eine der folgenden Angaben umfasst:
- eine Angabe über eine Gefahr der Beschädigung des Turbotriebwerks;
- eine Angabe über eine Gefahr des Blockierens des Turbotriebwerks; und
- eine Angabe über einen Arbeitsablauf, der es ermöglicht, dem Piloten Aktionen anzugeben, die durchzuführen sind.

2. Verfahren nach Anspruch 1,
**dadurch gekennzeichnet, dass** in Schritt b) der Wert, der den thermomechanischen Zustand des Turbotriebwerks veranschaulicht, mit Hilfe eines Berechnungsverfahrens, das in einem vorbereitenden Schritt bestimmt wird, bestimmt wird.

3. Verfahren nach Anspruch 2,
**dadurch gekennzeichnet, dass** zwecks Bestimmung dieses Berechnungsverfahren in einem vorbereitenden Schritt ein Versuch auf einem Prüfstand durchgeführt wird, der es ermöglicht, die thermomechanische Reaktion der Turbine in Abhängigkeit von verschiedenen getesteten Drehzahlen zu charakterisieren.

4. Verfahren nach einem der vorhergehenden Ansprüche,
**dadurch gekennzeichnet, dass** die aktuelle Drehzahl des Turbotriebwerks überwacht wird und dass die Schritte b) bis d) durchgeführt werden, sobald die aktuelle Drehzahl größer als eine Leerlaufdrehzahl ist.

5. Verfahren nach einem der vorhergehenden Ansprüche, **dadurch gekennzeichnet, dass** in Schritt c) der Wert des thermomechanischen Zustands mit einer Vielzahl von verschiedenen Schwellenwerten (S1, S2) verglichen wird.

6. Verfahren nach einem der Ansprüche 1 bis 5 für ein Flugzeug, das sich in einer Bodenphase befindet, wobei das Turbotriebwerk in Betrieb ist,
**dadurch gekennzeichnet, dass** in Schritt d) eine Angabe dargestellt wird, welche die Gefahr im Fall des Ausfalls des Turbotriebwerks anzeigt.

7. Verfahren nach Anspruch 6 für ein Flugzeug, das sich in einer Bodenphase befindet, bei dem sich gerade ein Ausfall des Turbotriebwerks ereignet hat, **dadurch gekennzeichnet, dass** in Schritt d) eine Angabe dargestellt wird, die Informationen über ein etwaiges Wiederanlassen des Turbotriebwerks und mindestens eine empfohlene Mindestwartezeit vor einem Wiederanlassen des Turbotriebwerks bereitstellt.

8. Verfahren nach Anspruch 7,
**dadurch gekennzeichnet, dass** in Schritt c) der aktuelle Wert des thermomechanischen Zustands mit zwei Schwellenwerten S1 und S2 verglichen wird und dass :
- wenn der aktuelle Wert größer oder gleich dem größten Schwellenwert S1 ist, das Turbotriebwerk einen thermomechanischen Zustand aufweist, bei dem der Ausfall des Turbotriebwerks zu vermeiden ist;
- wenn der aktuelle Wert zwischen S1 und S2 beträgt, das Turbotriebwerk einen thermomechanischen Zustand aufweist, bei dem die Abstellung Schwierigkeiten bei einem späteren Wiederanlassen bewirken kann; und
- wenn der aktuelle Wert kleiner oder gleich S2 ist, das Turbotriebwerk einen thermomechanischen Zustand aufweist, der eine Abstellung gestattet.

9. Verfahren nach einem der Ansprüche 1 bis 5 für ein Flugzeug, das sich in einer Flugphase befindet, bei dem sich gerade ein Ausfall des Turbotriebwerks ereignet hat,
**dadurch gekennzeichnet, dass** in Schritt d) eine Angabe dargestellt wird, die Informationen über ein etwaiges Wiederanlassen des Turbotriebwerks bereitstellt.

10. Verfahren nach Anspruch 9,
**dadurch gekennzeichnet, dass** die Angabe eine optimale Geschwindigkeit des Flugzeugs umfasst, um das Turbotriebwerk mit drehendem Propeller wiederanzulassen.

11. Vorrichtung zur Hilfe bei der automatischen Überwachung mindestens eines Turbotriebwerks eines Flugzeugs, das mindestens eine Turbine umfasst, wobei die Vorrichtung (1) erste Mittel (2) aufweist, um an einem Flugzeug mindestens eine Temperatur des Turbotriebwerks zu messen,
und im Weiteren Folgendes aufweist:
- zweite Mittel (3), um mit Hilfe der so gemessenen Temperatur einen Wert zu bestimmen, der einen thermomechanischen Zustand des Turbotriebwerks veranschaulicht, der die Ausdehnung mindestens eines seiner Elemente in Abhängigkeit von thermischen Bedingungen veranschaulicht;
- dritte Mittel (5), um den so bestimmten Wert des thermomechanischen Zustands mit mindestens einem Schwellenwert (S1 bis S3) zu vergleichen; und
- Anzeigemittel (7), die auf einem Anzeigebildschirm (9) des Cockpits des Flugzeugs in Abhängigkeit von dem Vergleich, der durch die dritten Mittel (5) durchgeführt wurde, mindestens eine Angabe (11 bis 15) über den Betrieb des Turbotriebwerks darstellen, die mindestens eine der folgenden Angaben umfasst:
- eine Angabe über eine Gefahr der Beschädigung des Turbotriebwerks;
- eine Angabe über eine Gefahr des Blockierens des Turbotriebwerks; und
- eine Angabe über einen Arbeitsablauf, der es ermöglicht, dem Piloten Aktionen anzugeben, die durchzuführen sind.

12. Vorrichtung nach Anspruch 11,
**dadurch gekennzeichnet, dass** die zweiten und dritten Mittel (3, 5) Teil eines Rechners zum Steuern des Turbotriebwerks sind.

13. Vorrichtung nach Anspruch 11,
**dadurch gekennzeichnet, dass** die zweiten und dritten Mittel (3, 5) Teil eines Rechners zum Steuern des Flugzeugs sind.

14. Flugzeugsystem für ein Flugzeug mit einer Vielzahl von Turbotriebwerken,
**dadurch gekennzeichnet, dass** es eine Vielzahl von Vorrichtungen (1) nach einem der Ansprüche 11 bis 13 aufweist, von denen jede einem dieser Turbotriebwerke zugeordnet ist.

15. Flugzeug,
**dadurch gekennzeichnet, dass** es mindestens eine Vorrichtung (1) nach einem der Ansprüche 11 bis 13 aufweist.

## Claims

1. An aiding method for monitoring at least one turbine engine of an aircraft comprising at least one turbine, such method **characterized in that**:
a) at least one temperature relating to the turbine engine is measured on the aircraft;
wherein are automatically and repeatedly performed the following successive operations consisting in:
b) with the help of the thus measured temperature, determining a value illustrating a thermomechanical condition of the turbine engine illustrating the expansion of at least one element of the latter depending on thermal conditions;
c) comparing the thus determined value of the thermomechanical condition with at least one threshold value (S1 to S3) ; and
d) providing at least displaying means (7) showing on a viewing screen (9) of the aircraft cockpit, depending on the comparison implemented at step c), at least one indication (I1 to I5) relating to the operation of the turbine engine which comprises at least one of the following indications:
- an indication relating to a damage risk for the turbine engine;
- an indication relating to a lock risk for the turbine engine; and
- an indication relating to an operational procedure, such that the pilot is informed about the actions to be implemented.

2. The method according to claim 1,
**characterized in that** at step b), there is determined the value illustrating the thermomechanical condition of said turbine engine thru a calculation method being determined at a preliminary step.

3. The method according to claim 2, ch
aracterized in that, to define said calculation method, at a preliminary step, a bench test experiment is performed, enabling to characterize the thermomechanical response of the turbine depending on the different speeds being tested.

4. The method according to one of the preceding claims,
**characterized in that** the current speed of the turbine engine is monitored and **in that** steps b) to d) are implemented as soon as said current speed is higher than the idle speed.

5. The method according to any one of the preceding claims,
**characterized in that** at step c), the value of the thermomechanical condition is compared with a plurality of different threshold values (S1, S2).

6. The method according to any one of claims 1 to 5,
for an aircraft being in a ground phase, the turbine engine being in operation,
**characterized in that** at step d), one indication is shown that indicates the pending risk upon a shutdown of the turbine engine.

7. The method according to claim 6, for an aircraft in a ground phase, for which has just occurred a shutdown of the turbine engine,
**characterized in that** at step d), one indication is shown providing information relating to a possible re-starting of the turbine engine and at least a minimum waiting duration being recommended before a re-starting of the turbine engine.

8. The method according to claim 7,
**characterized in that** at step c), the current value of the thermomechanical condition is compared with two threshold values S1 and S2, and :
- when said current value is higher than or equal to the biggest threshold value S1, the turbine engine presents a thermomechanical condition, for which the shutdown of said turbine engine is to be avoided;
- when the current value is comprised between S1 and S2, the turbine engine presents a thermodynamic condition, for which the shutdown can cause difficulties upon a subsequent re-starting; and
- when the current value is lower than or equal to S2, the turbine engine presents a thermomechanical condition making a shutdown possible.

9. The method according to any one of claims 1 to 5, for an aircraft being in a flight phase, for which a turbine engine shutdown has just occurred, ch
aracterized in that at step d), an indication is presented, which provides information relating to a possible re-starting of the turbine engine.

10. The method according to claim 9,
**characterized in that** said indication comprises an optimum speed of the aircraft to re-start the turbine engine in windmill.

11. An aiding device for automatically monitoring at least one aircraft turbine engine, comprising at least one turbine, said device (1) including :
- first means (2) for measuring on the aircraft at least one temperature relating to the turbine engine;
- second means (3) for determining, thru the thus measured parameter, a value illustrating a thermomechanical condition of the turbine engine, showing the expansion of at least one element of the latter as a function of thermal conditions;
- third means (5) for comparing the value of the thus determined thermomechanical condition with at least one threshold value (S1 to S3) ; and
- displaying means (7) showing on a viewing screen (9) of the aircraft cockpit, depending on the comparison implemented by said third means (5), at least one indication (11 to 15) relating to the operation of the turbine engine which comprises at least one of the following indications:
• an indication relating to a damage risk for the turbine engine;
• an indication relating to a lock risk for the turbine engine; and
• an indication relating to an operational procedure, such that the pilot is informed about the actions to be implemented.

12. The device according to claim 11,
**characterized in that** said second and third means (3,5) are part of a control calculator for the turbine engine.

13. The device according to claim 11,
**characterized in that** said second and third means (3,5) are part of an aircraft calculator.

14. An aircraft system for an aircraft provided with a plurality of turbine engines,
**characterized in that** it comprises a plurality of devices (1) such as the one specified in one of claims 11 to 13, each of which is associated with one of said turbine engines.

15. An aircraft,
**characterized in that** it comprises at least one device such as the one specified in one of claims 11 to 13.
